# FASCICULE DE BREVET EUROPEEN

(11) **EP 3 756 039 B1**
(45) Date de publication et mention de la délivrance du brevet: **30.03.2022**
(21) Numéro de dépôt: 19705770.6
(22) Date de dépôt: 22.02.2019
(51) Int. Cl.: G02B 13/06, H01P 1/20, H01Q 3/00, G01J 3/02, G01J 3/46

(54) **DISPOSITIF D'IMAGERIE ET D'INFORMATION SPECTROSCOPIQUE**
VORRICHTUNG ZUR ABBILDUNG UND BEREITSTELLUNG VON SPEKTROSKOPISCHEN INFORMATIONEN
DEVICE FOR IMAGING AND DELIVERING SPECTROSCOPIC INFORMATION

(30) Priorité: 22.02.2018 FR 1851550
(43) Date de publication de la demande: 30.12.2020
(73) Titulaire: Office National d'Etudes et de Recherches Aérospatiales, 91120 Palaiseau (FR)
(72) Inventeur: PRIMOT, Jérôme, 92320 CHATILLON (FR); SUFFIS, Sabine, 91190 GIF SUR YVETTE (FR); THETAS, Sophie, 78730 SAINT-ARNOULT-EN-YVELINES (FR); BELLANGER, Cindy, 91300 MASSY (FR); KATTNIG, Alain, 91440 BURES-SUR-YVETTE (FR); HAÏDAR, Riad, 75012 PARIS (FR); JAECK, Julien, 91440 BURES-SUR-YVETTE (FR); BOUCHON, Patrick, 91370 VERRIERES LE BUISSON (FR); BOHER, Micke, 91310 LONGPONT-SUR-ORGE (FR)
(74) Mandataire: Plasseraud IP
(86) Numéro de dépôt international: PCT/EP2019/054425
(87) Numéro de publication internationale: WO 2019/162431

(56) Documents cités:
- JP-B2- 5 734 191
- US-A1- 2016 306 079
- US-B2- 8 558 873
- NANFANG YU ET AL: "Flat Optics: Controlling Wavefronts With Optical Antenna Metasurfaces", IEEE JOURNAL OF SELECTED TOPICS IN QUANTUM ELECTRONICS, IEEE SERVICE CENTER, PISCATAWAY, NJ, US, vol. 19, no. 3, 1 mai 2013 (2013-05-01), page 4700423, XP011513256, ISSN: 1077-260X, DOI: 10.1109/JSTQE.2013.2241399

## Description

La présente invention concerne un dispositif d'imagerie et d'information spectroscopique.

Il existe des applications de détection et/ou de surveillance optique, pour lesquelles les informations qui peuvent être recueillies à partir d'images sont insuffisantes pour aboutir à une probabilité de fausse alarme qui soit faible, et/ou qui ne permettent pas de caractériser suffisamment un objet qui apparaît dans les images saisies. En effet, pour réaliser une surveillance optique, le contenu d'un champ à surveiller est communément saisi en images répétitivement, par exemple à une cadence de dix images par seconde, et chaque image est analysée, ou bien les variations qui surviennent entre des accumulations successives sont analysées, afin de détecter des évènements qui se produiraient à l'intérieur du champ de surveillance. En général, le champ à surveiller est large ou très large, si bien qu'un objectif à grand champ optique d'entrée est utilisé, voire dans certains cas un objectif à très large champ optique d'entrée, dit de type fish-eye. Si l'événement recherché est constitué par un objet qui est petit par rapport à l'extension du champ optique d'entrée, cet objet peut apparaître dans les images qui sont saisies avec une taille proche de la limite de résolution spatiale du dispositif d'imagerie, ou plus petit, voire beaucoup plus petit que cette limite de résolution. Alors, pour réduire la probabilité de fausse alarme, on peut appliquer des filtres par rapport au contraste apparent de l'objet dans les images saisies, et/ou par rapport à la trajectoire de l'objet qui est révélée par les images saisies successivement. Néanmoins, les valeurs de probabilité de fausse alarme qui sont ainsi obtenues peuvent encore être trop élevées.

Pour réduire la valeur de probabilité de fausse alarme, il a aussi été proposé de recueillir une information spectrale de l'objet qui est détecté optiquement, en plus de l'information d'imagerie. Ainsi, des caméras multispectrales ou hyperspectrales sont proposées pour des applications de détection ou de surveillance. Mais de telles caméras multi- ou hyperspectrales sont complexes et onéreuses, et requièrent des moyens de calcul importants pour corréler entre elles des images qui sont saisies simultanément selon plusieurs couleurs, afin de caractériser l'objet qui apparaît dans plusieurs de ces images.

Des systèmes interférométriques ont aussi été proposés pour produire l'information spectrale, mais ils sont aussi complexes à mettre en oeuvre et/ou onéreux.

De tels besoins de détection et de surveillance apparaissent dans de nombreuses situations, notamment du domaine civil, telles que la télédétection satellitale par exemple, c'est-à-dire la détection par imagerie à partir d'un satellite d'objets qui sont à la surface de la Terre.

Toutefois, une application militaire est la détection de départs de missiles à l'intérieur d'une zone à risque, lorsque de tels départs peuvent constituer des menaces. Un ou plusieurs dispositif(s) de surveillance par imagerie est (sont) alors pointé(s) vers la zone à risque, chacun ayant un champ optique d'entrée qui contient tout ou une partie cette zone, et l'apparition d'au moins un missile qui viendrait de décoller est recherchée dans des images qui sont saisies continuellement. L'objectif est alors d'acquérir le plus rapidement possible des informations optiques qui permettent de confirmer la survenue d'un départ de missile, et éventuellement de déterminer en plus le type de la menace, par exemple le type du missile qui a été lancé, afin d'engager au plus vite des réactions appropriées. Les causes de fausses alarmes dans le cas d'une telle surveillance de départs de missiles peuvent être des reflets solaires, y compris sur des parties de nuages, sur des avions civils et même des oiseaux.

Un but de la présente invention est alors de proposer un nouveau dispositif optique qui soit adapté pour des applications de détection et/ou de surveillance, et qui permette d'obtenir des valeurs faibles de probabilité de fausse alarme.

Un but additionnel de l'invention est de fournir une information spectroscopique sur un objet qui est détecté par imagerie à l'intérieur du champ optique d'entrée, cette information spectroscopique aidant à caractériser l'objet détecté, par exemple en discriminant entre plusieurs possibilités quant au type de l'objet détecté.

D'autres buts additionnels de l'invention sont qu'un tel dispositif soit simple à mettre en œuvre, robuste, fiable, rapide à fournir l'information sur l'objet détecté, et peu onéreux ou avec un surcoût par rapport aux systèmes existants de détection et/ou de surveillance qui soit restreint.

Pour atteindre ces buts ou d'autres, l'invention propose un dispositif d'imagerie et d'information spectroscopique qui comprend les caractéristiques récitées dans la revendication 1. Des modes de réalisation additionnels sont définis dans les revendications dépendantes.

Selon l'invention, le composant optique à fonction de différenciation spectrale est adapté pour modifier une image d'un point de la scène lorsque l'objectif est pourvu de ce composant optique, par rapport à l'image du même point de la scène telle que formée par l'objectif dépourvu du composant optique. En outre, l'image du point de la scène est modifiée de façons différentes pour au moins deux couleurs possibles pour les rayons lumineux qui proviennent du point de la scène. Ainsi, une forme de l'image du point de la scène, qui apparaît dans l'image telle que saisie par le capteur d'image, fournit une information spectroscopique sur le point de la scène.

Autrement dit, le composant optique à fonction de différenciation spectrale remplace dans l'image saisie, la forme réelle d'un objet par une forme apparente qui fournit une information spectroscopique sur le rayonnement lumineux - ou rayonnement électromagnétique - qui provient de l'objet. Cette information spectroscopique peut alors participer à identifier la nature ou le type de l'objet qui apparaît dans une des images saisies. En particulier, elle peut permettre de discriminer entre un objet d'intérêt et une cause de fausse alarme. La probabilité de fausse alarme est ainsi réduite pour un dispositif selon l'invention.

En outre, l'information spectroscopique est contenue directement dans chaque image qui est saisie, si bien que le dispositif de l'invention ne nécessite pas de multiplier des voies d'imagerie, ni d'ajouter une voie d'acquisition spectrophotométrique en plus de la voie d'imagerie. Le dispositif d'imagerie, fonctionnel dans un intervalle spectral qui contient les couleurs recherchées, est suffisant en tant que matériel optique pour mettre en oeuvre l'invention. L'information spectroscopique peut être obtenue par un traitement d'analyse d'image qui est appliqué séparément à chaque image saisie. Ce peut être notamment un traitement d'image simple et rapide, tel que par exemple un traitement par transformation de Fourier du contenu de chaque image qui est saisie. En particulier, aucun étalonnage n'est indispensable pour récupérer la forme apparente de l'objet dans l'image, cette forme apparente fournissant l'information spectroscopique. Pour ces raisons, le dispositif de l'invention peut être particulièrement simple, rapide à mettre en œuvre, et n'engendrer qu'un surcoût restreint, essentiellement limité au composant optique à fonction de différenciation spectrale.

Pour de nombreuses situations d'utilisation d'un dispositif de détection et/ou de surveillance, et comme déjà mentionné plus haut, l'objet d'intérêt qui est détecté peut être petit dans le champ optique d'entrée, et souvent proche de la limite de résolution spatiale du dispositif d'imagerie, ou plus petit, voire beaucoup plus petit que cette limite de résolution. La forme réelle de l'objet est alors mal rendue dans chaque image, ou bien n'apparaît pas, si bien que le remplacement de cette forme réelle de l'objet dans les images saisies par une forme d'information spectroscopique ne constitue pas une perte d'information d'imagerie significative, mais constitue un gain d'information spectrale qui permet de mieux caractériser l'objet détecté et réduire la probabilité de fausse alarme.

Dans le cadre de la présente invention, on entend par couleur de rayonnement électromagnétique, ou de rayons lumineux, un intervalle continu de longueur d'onde qui est restreint autour d'une longueur d'onde centrale, et dans lequel le rayonnement présente une énergie spectrale non nulle. En particulier, le terme de couleur est utilisé dans toute la présente description sans limitation par rapport au domaine spectral de la lumière qui est visible pour l'Homme. Il s'applique donc notamment dans le domaine visible, mais aussi dans tout le domaine infrarouge, et éventuellement aussi dans le domaine proche-ultraviolet.

De préférence, le composant optique à fonction de différenciation spectrale peut être adapté pour modifier l'image du point de la scène selon un premier motif d'image pour des rayons lumineux d'une première couleur qui proviennent de ce point de la scène, et pour modifier l'image du même point de la scène selon un second motif d'image pour des rayons lumineux d'une seconde couleur qui proviennent aussi de ce point de la scène. Les première et seconde couleurs sont séparées spectralement, et les premier et second motifs d'image sont différents. Dans le jargon de l'Homme du métier, chaque motif d'image est appelé «fonction d'étalement du point», correspondant à l'acronyme FEP, ou PSF pour «Point Spread Function» en anglais, ou encore RIO pour «réponse impulsionnelle optique». Ainsi, le motif qui est apparent dans l'image à l'emplacement de l'image géométrique d'un objet de la scène est une indication de la composition de couleur de cet objet : si le motif apparent correspond au premier motif d'image seulement, alors l'objet émet du rayonnement de la première couleur, si le motif apparent correspond au second motif d'image seulement, alors l'objet émet du rayonnement de la seconde couleur, et si le motif apparent est une superposition des deux motifs d'image, alors l'objet émet du rayonnement qui comporte simultanément les deux couleurs. Evidemment, le composant optique peut détecter plus de deux couleurs s'il est conçu pour associer des motifs d'image différents à trois couleurs ou plus. La recherche d'un motif d'image prédéterminé dans une image saisie peut être réalisée notamment en appliquant un traitement par transformation de Fourier au contenu d'image.

En particulier, le composant optique à fonction de différenciation spectrale peut être adapté pour étirer, décaler ou dédoubler l'image du point de la scène, dans l'image telle que saisie par le capteur d'image, selon des directions d'étirement, de décalage ou de dédoublement qui sont différentes entre les deux couleurs possibles pour les rayons lumineux qui proviennent du point de la scène.

De façon générale pour l'invention, le composant optique à fonction de différenciation spectrale est adapté pour déphaser des rayons lumineux qui proviennent d'un même point de la scène mais qui traversent deux parties différentes d'une section transversale du dispositif, conformément à un premier écart de déphasage effectif entre ces deux parties pour une première couleur possible pour les rayons lumineux, et conformément à un second écart de déphasage effectif aussi entre les deux mêmes parties mais pour une seconde couleur aussi possible pour les rayons lumineux, les deux couleurs étant séparées spectralement et les deux écarts de déphasage étant différents. Autrement dit, les rayons lumineux de chaque couleur sont affectés différemment en déphasage selon la partie de la section transversale du dispositif qu'ils traversent, pour au moins l'une des deux couleurs, et les écarts de déphasage entre les deux parties de la section transversale du dispositif ne sont pas les mêmes pour les deux couleurs. Ainsi, conformément à l'invention, le composant optique à fonction de différenciation spectrale peut être un révélateur sélectif pour l'une au moins des deux couleurs, ou pour chacune des deux couleurs, ou pour un nombre supérieur de couleurs. Certains des écarts de déphasage qui sont produits par le composant optique à fonction de différenciation spectrale entre les deux parties de la section transversale du dispositif, tel qu'utilisé dans l'invention, peuvent éventuellement être nuls entre deux parties différentes de la section transversale, pour au moins une couleur alors qu'ils sont non-nuls pour au moins une autre couleur.

Dans le cadre de la présente invention, on entend par section transversale du dispositif une portion de surface qui coupe l'axe optique du dispositif et tous les rayons lumineux qui participent à former l'image saisie par le capteur d'image. Une telle section transversale peut être plane ou non, correspondre à une pupille de l'objectif ou non, correspondre ou non à une surface optique de lentille ou de miroir qui entre dans la constitution de l'objectif, ou être formée par un support qui est dédié au composant optique à fonction de différenciation spectrale. Une telle section transversale n'a pas de limitation par rapport à un éventuel centre optique longitudinal de l'objectif.

Dans des modes non revendiqués de réalisation de l'invention, le composant optique à fonction de différenciation spectrale peut être une lame de phase dont les caractéristiques de déphasage, pour au moins une couleur, varient entre des parties différentes de la section transversale du dispositif. De préférence, ces caractéristiques de déphasage d'une telle lame de phase varient entre les parties différentes de la section transversale du dispositif de façons qui sont différentes entre la première couleur et la seconde couleur. Une telle lame de phase peut en particulier être constituée au moins en partie par un film d'un matériau diélectrique dont l'épaisseur varie par zones dans la section transversale du dispositif.

Dans le mode principal de l'invention, le composant optique à fonction de différenciation spectrale comporte des résonateurs électromagnétiques identiques qui sont efficaces chacun pour déphaser et/ou atténuer de façon variable des rayons lumineux lorsqu'une couleur de ces rayons lumineux varie par rapport à une longueur d'onde de résonance de chaque résonateur. Ces résonateurs identiques sont répartis dans l'une des parties de la section transversale du dispositif, à l'exclusion d'au moins une autre partie de cette section transversale.

De préférence, chacun des résonateurs électromagnétiques du composant optique à fonction de différenciation spectrale peut posséder au moins une dimension, mesurée parallèlement à la section transversale du dispositif, qui est inférieure à la longueur d'onde de résonance de ce résonateur. Dans le jargon de l'Homme du métier, de tels résonateurs électromagnétiques sont appelés nano-résonateurs, bien que l'une ou chacune de leur dimension puisse être supérieure à quelques nanomètres ou quelques dizaines de nanomètres. Leur utilisation peut permettre de limiter une diffusion parasite de lumière que pourraient produire les résonateurs. De cette façon, les motifs d'image utilisés pour produire la fonction de différenciation spectrale peuvent être définis plus précisément. Par exemple, un dispositif conforme à l'invention peut ainsi être particulièrement adapté pour des fonctions d'imagerie et d'information spectroscopique qui sont effectives dans les domaines visible et proche-infrarouge lorsque chaque résonateur électromagnétique possède au moins une dimension, mesurée parallèlement à la section transversale du dispositif, qui est inférieure à 1 µm (micromètre).

Possiblement, le composant optique peut comporter des résonateurs électromagnétiques de plusieurs types différents, correspondant à des longueurs d'onde de résonance qui sont différentes entre des résonateurs de types différents. Alternativement ou en combinaison, des résonateurs électromagnétiques de types différents peuvent correspondre à des valeurs de déphasage relatives à une même longueur d'onde qui sont différentes. Alors, les résonateurs de chaque type sont contenus dans une partie de la section transversale du dispositif qui présente au moins un bord dont une orientation, à l'intérieur de cette section transversale, est différente de l'orientation d'au moins un bord de chaque autre partie de la section transversale du dispositif qui contient des résonateurs d'un autre type. De cette façon, le dispositif de l'invention peut indiquer la présence ou l'absence de plusieurs couleurs dans le rayonnement qui est produit par l'objet détecté. Une information spectrale plus complète est ainsi disponible, notamment pour identifier la nature ou le type de l'objet qui est détecté.

Dans des modes particuliers de réalisation de l'invention, le composant optique peut comporter N types de résonateurs électromagnétiques, N étant un entier naturel qui est compris entre 1 et 33, c'est-à-dire de 2 à 2⁵. Une portion de la section transversale du dispositif peut alors être divisée en N zones, chaque zone pouvant être par exemple un secteur angulaire qui s'étend à partir d'un point central de cette portion de section transversale. Dans une telle configuration, chaque partie de la section transversale du dispositif, qui est dédiée à contenir tous les résonateurs électromagnétiques d'un des types, peut être constituée à l'intérieur de la portion de section transversale par une sélection d'une ou plusieurs des zones, cette sélection étant spécifique à ce type de résonateurs par rapport aux autres types de résonateurs. Toutefois, la partie de section transversale qui est dédiée à contenir tous les résonateurs électromagnétiques d'un des types peut aussi contenir en plus une partie des résonateurs de certains des autres types.

Par exemple, pour caractériser deux couleurs dans le rayonnement électromagnétique qui provient de l'objet détecté, N peut être égal à 3, et la portion de section transversale du dispositif peut être divisée en des première, deuxième et troisième zones. Par exemple, chaque zone peut être un secteur angulaire qui s'étend à partir d'un centre de la portion de section transversale, et les trois zones peuvent avoir des largeurs angulaires respectives qui sont égales. Les résonateurs électromagnétiques de premier, deuxième et troisième types peuvent alors être contenus séparément dans les première, deuxième et troisième zones, avec un seul des types de résonateurs électromagnétiques par zone. En outre, les résonateurs électromagnétiques peuvent être adaptés pour produire des écarts de déphasage qui sont égaux à 2·π/3 ±π/4, c'est-à-dire compris entre 2·π/3 -π/4 et 2·π/3 +π/4, de préférence entre 2·π/3 -π/8 et 2·π/3 +π/8, pour une première couleur en passant d'une des zones à une autre selon un parcours orienté dans la portion de section transversale, et égaux à 4·π/3 ±π/4, c'est-à-dire compris entre 4·π/3 -π/4 et 4·π/3 +π/4, de préférence entre 4·π/3 -π/8 et 4·π/3 +π/8, pour une seconde couleur en passant d'une des zones à une autre selon le même parcours orienté dans la portion de section transversale, les première et seconde couleurs étant encore séparées spectralement. Les mêmes écarts de déphasage selon une même partition de zones à l'intérieur de la portion de section transversale peuvent être produits alternativement par une lame de phase, en remplacement de l'utilisation de résonateurs électromagnétiques.

Autrement, mais encore pour caractériser deux couleurs dans le rayonnement électromagnétique qui provient de l'objet détecté, N peut être égal à 4, et la portion de section transversale du dispositif peut être divisée en des première, deuxième, troisième et quatrième zones. En particulier, chaque zone peut encore être un secteur angulaire qui s'étend à partir du centre de la portion de section transversale, et les quatre zones peuvent encore avoir des largeurs angulaires respectives qui sont égales. Des résonateurs électromagnétiques de premier, deuxième, troisième et quatrième types peuvent alors être contenus dans les première, deuxième, troisième et quatrième zones à raison de deux types de résonateurs électromagnétiques par zone, et en variant un seul type de résonateurs électromagnétiques entre deux zones qui sont voisines à l'intérieur de la portion de section transversale. En outre, les résonateurs électromagnétiques peuvent être adaptés pour produire des écarts de déphasage qui sont égaux à :
π ±π/4, c'est-à-dire compris entre 3·π/4 et 5·π/4, de préférence entre 7·π/8 et 9·π/8, pour une première couleur entre celles des zones qui sont séparées selon une première direction de frontière à l'intérieur de la portion de section transversale ;
0 ±π/4, c'est-à-dire compris entre -π/4 et +π/4, de préférence entre -π/8 et +π/8, pour la même première couleur entre celles des zones qui sont séparées selon une seconde direction de frontière différente de la première direction de frontière à l'intérieur de la portion de section transversale ;
π ±π/4, c'est-à-dire compris entre 3·π/4 et 5·π/4, de préférence entre 7·π/8 et 9·π/8, pour une seconde couleur entre celles des zones qui sont séparées selon la seconde direction de frontière à l'intérieur de la portion de section transversale, les première et seconde couleurs étant encore séparées spectralement ; et
0 ±π/4, c'est-à-dire compris entre -π/4 et +π/4, de préférence entre -π/8 et +π/8, pour la seconde couleur entre celles des zones qui sont séparées selon la première direction de frontière à l'intérieur de la portion de section transversale.

Préférablement, les première et seconde directions de frontière entre zones qui sont voisines dans la portion de section transversale du dispositif, peuvent être perpendiculaires.

Selon un perfectionnement de l'invention qui peut être adapté notamment pour des objectifs de type grand-angle ou fish-eye, un motif qui est formé par les zones contenues dans la portion de la section transversale du dispositif, telles que mises en oeuvre précédemment, avec les résonateurs électromagnétiques qui sont contenus dans chacune des zones, peut être répété dans la section transversale du dispositif de façon à former un pavage de cette section transversale.

Dans des modes de réalisation possibles de l'invention, chaque résonateur électromagnétique peut être l'un parmi :
- une nano-antenne de type métal-isolant-métal, et le composant optique à fonction de différenciation spectrale est alors utilisé pour réfléchir les rayons lumineux à l'intérieur du dispositif ;
- un nano-bâtonnet métallique qui est disposé sur un support transparent, et dans ce cas le composant optique à fonction de différenciation spectrale est utilisé pour transmettre les rayons lumineux à travers le support transparent à l'intérieur du dispositif ; et
- une cavité ou une portion d'un matériau diélectrique qui est comprise entre au moins deux portions conductrices électriquement, et qui forme un résonateur de Helmholtz efficace en réflexion pour un rayonnement électromagnétique incident sur la cavité ou la portion de matériau diélectrique, et le composant optique à fonction de différenciation spectrale est utilisé de nouveau pour réfléchir les rayons lumineux à l'intérieur du dispositif.

Possiblement, le composant optique à fonction de différenciation spectrale peut être disposé sur une face optique d'une lentille de l'objectif, ou peut former une face optique réfléchissante de l'objectif, dans les deux cas de préférence une face optique d'entrée de l'objectif.

De façon générale, le dispositif de l'invention peut comprendre en outre des moyens d'analyse de l'image de la scène qui est saisie par le capteur d'image, ces moyens d'analyse étant adaptés pour appliquer un traitement par transformation de Fourier à l'image de la scène, et pour produire l'information spectroscopique à partir d'un résultat du traitement par transformation de Fourier.

Pour une application de surveillance dans un champ qui est large, c'est-à-dire avec un angle d'ouverture du champ optique d'entrée qui est supérieur à 120°, l'objectif peut être d'un type grand-angle ou fish-eye.

Enfin, le dispositif peut comprendre en outre :
- des moyens d'activation, qui sont adaptés pour commander des saisies d'images successives par le capteur d'image lorsque l'objectif est pourvu du composant optique à fonction de différenciation spectrale, et pour commander les moyens d'analyse de façon à fournir l'information spectroscopique pour au moins un point de la scène à partir de chaque image saisie ;
- des moyens de mémoire, qui sont adaptés pour mémoriser au moins un critère spectroscopique ;
- des moyens de comparaison, qui sont agencés pour comparer avec le critère mémorisé, l'information spectroscopique fournie pour le point de la scène à partir d'au moins une des images saisies ; et
- des moyens de détection, qui sont adaptés pour produire un message de détection positive lorsque l'information spectroscopique qui est obtenue pour le point de la scène correspond au critère mémorisé.

D'autres particularités et avantages de la présente invention apparaîtront dans la description ci-après d'exemples de réalisation non limitatifs, en référence aux dessins annexés, dans lesquels :
- la figure 1 est une section longitudinale d'un dispositif d'imagerie et d'information spectroscopique qui est conforme à l'invention ;
- les figures 2a, 2b et 2c représentent respectivement une division d'une section transversale d'un dispositif qui est conforme à la figure 1 (figure 2a), et des motifs d'image résultants (figures 2b et 2c) qui peuvent être utilisés pour détecter deux couleurs conformément à des premiers modes de réalisation de l'invention ;
- la figure 3a est un diagramme de valeurs de déphasage qui sont produites par des nano-antennes, en fonction d'une longueur d'onde d'un rayonnement électromagnétique, pour plusieurs valeurs de longueur des nano-antennes ;
- la figure 3b correspond à la figure 2a, pour une autre division de la section transversale du dispositif de la figure 1, et avec une répartition de nano-antennes de quatre types différents conformément à des seconds modes de réalisation de l'invention ;
- les figures 3c-3f sont des diagrammes en fonction de la longueur d'onde du rayonnement électromagnétique, qui montrent des écarts de déphasage qui existent entre zones voisines pour la répartition de nano-antennes de la figure 3b ;
- la figure 3g montre une direction de frontière associée à un écart de déphasage qui est produit pour une première couleur, pour les seconds modes de réalisation de l'invention des figures 3b-3f, et montre un premier motif d'image qui en résulte pour détecter la première couleur ;
- la figure 3h correspond à la figure 3g pour une seconde couleur et pour les mêmes seconds modes de réalisation de l'invention, et montre un second motif d'image qui en résulte pour détecter la seconde couleur ;
- la figure 4 illustre un perfectionnement de l'invention, qui peut être adapté notamment pour un mode de réalisation de l'invention à objectif de type grand-angle ou fish-eye ;
- la figure 5 montre différents modules d'un dispositif conforme à l'invention qui constitue un système de surveillance ; et
- les figures 6a, 6b et 6c sont des vues en perspective de trois types de résonateurs électromagnétiques qui peuvent être utilisés dans des modes de réalisation de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

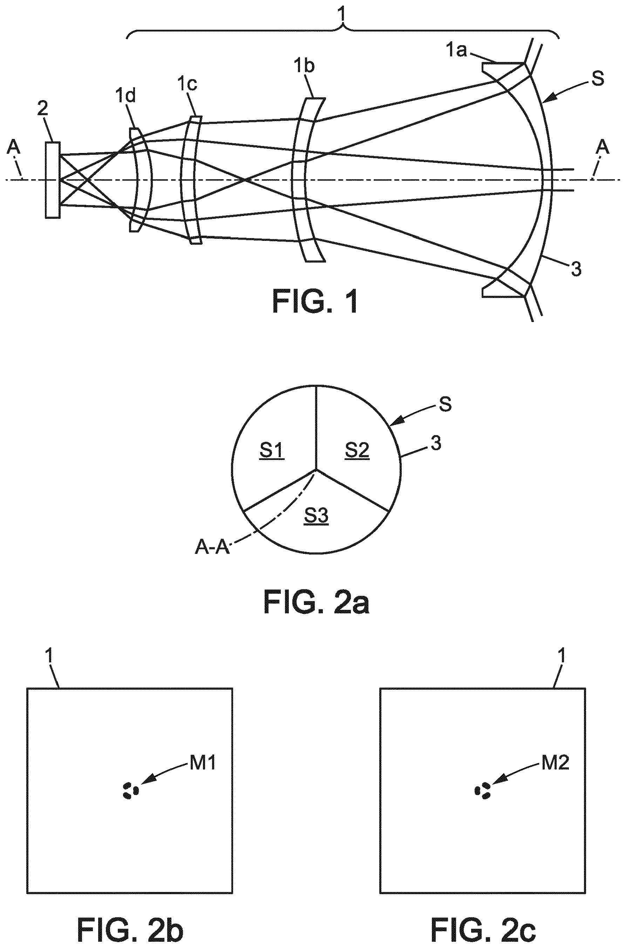

Conformément à la figure 1, un dispositif d'imagerie peut comporter un objectif 1 qui est composé de plusieurs lentilles, par exemple quatre lentilles 1a-1d, et un capteur d'image 2. Possiblement, l'objectif peut comporter des composants optiques réfléchissants, tels que des miroirs asphériques, à la place de certaines au moins des lentilles. L'objectif 1 peut être en particulier d'un des types grand-angle et très-grand-angle (fish-eye), connus de l'Homme du métier, avec notamment une ouverture angulaire du champ optique d'entrée qui peut être supérieure à 120° (degré). Le capteur d'image 2 est placé dans le plan focal de l'objectif 1, et peut être un capteur matriciel d'un des modèles disponibles commercialement.

Les références A-A et S dans la figure 1 indiquent un axe optique du dispositif d'imagerie et une section de ce dispositif qui coupe l'axe optique A-A. La section S a été appelée section transversale dans la partie générale de la présente description. Ce peut être une pupille de l'objectif 1, ou une face optique d'un des composants de l'objectif 1, dioptrique ou réfléchissante. D'une façon générale pour l'invention, la section transversale S n'est pas forcément plane, notamment lorsqu'elle correspond à une face optique d'un des composants de l'objectif 1. De préférence, la section transversale S ne correspond pas à un plan d'image intermédiaire. Dans des modes de réalisation possibles de l'invention, et notamment lorsque l'objectif 1 est de type grand-angle ou fish-eye, la section transversale S peut être une face d'entrée de l'objectif 1, par exemple la face optique antérieure de la lentille 1a (figure 1).

Conformément à l'invention, un composant supplémentaire est ajouté à l'objectif 1, dont une fonction est de produire une indication de couleur dans chaque image qui est saisie par le capteur 2. Pour cette raison, ce composant supplémentaire est appelé composant optique à fonction de différenciation spectrale. Il peut être appliqué sur une face optique d'un des composants à fonction d'imagerie de l'objectif 1, ou bien former un composant optique séparé qui est autosupporté ou qui possède un support distinct des autres composants optiques. Dans les modes de réalisation de l'invention qui sont décrits plus loin, ce composant optique à fonction de différenciation spectrale est superposé à la section transversale S du dispositif telle qu'introduite ci-dessus, et est référencé 3 dans les figures. Ainsi, il est traversé par les rayons lumineux qui proviennent d'une scène contenue dans le champ optique d'entrée du dispositif d'imagerie, et qui forment une image de cette scène sur le capteur d'image 2.

Notamment lorsque l'objectif 1 est de type grand-angle ou fish-eye, un objet qui se trouve dans le champ optique d'entrée et qui possède des dimensions limitées peut apparaître dans l'image à la limite de la résolution spatiale du dispositif d'imagerie, ou plus petit que cette limite de résolution. Dans ce cas, remplacer à l'intérieur de chaque image l'apparence quasi-ponctuelle ou ponctuelle de cet objet par un autre motif ne provoque pas une perte d'information par rapport à un but d'identification de l'objet. A partir de cette situation, la présente invention, qui consiste à remplacer dans chaque image saisie l'apparence de l'objet par un motif d'image qui procure une information spectroscopique sur le rayonnement électromagnétique qui est produit par l'objet, constitue un gain d'information important pour parvenir à identifier l'objet. De préférence, chaque motif d'image qui est utilisé pour exprimer une information spectroscopique selon l'invention peut avoir une extension qui est réduite à l'intérieur de chaque image saisie, afin de masquer au minimum d'autres éléments de scène qui se trouvent aussi dans le champ optique d'entrée. En particulier, chaque motif d'image qui est utilisé pour exprimer une information spectroscopique peut avoir des dimensions dans l'image saisie qui sont peu supérieures à la limite de résolution spatiale du dispositif d'imagerie. Par exemple, chaque motif d'image utilisé peut avoir une extension dans chaque image qui est saisie, qui est de l'ordre de quelques pixels du capteur d'image 2, préférablement trois ou cinq pixels.

Dans des premiers modes de réalisation possibles de l'invention, qui sont décrits maintenant en référence aux figures 2a-2c, le composant optique 3 peut être une lame de phase en matériau transparent, d'épaisseur non-uniforme. Une telle lame de phase peut donc être disposée au sein de l'objectif 1 pour coïncider avec la section transversale S.

Conformément à la figure 2a, un tel composant optique 3 peut être divisé dans la section transversale S en trois zones adjacentes S1, S2 et S3 de tailles identiques. Par exemple, chacune de ces zones peut être un secteur angulaire qui est issu de l'intersection de l'axe optique A-A avec la section transversale S, avec un angle au sommet de chaque zone qui est égal à 2·π/3. Le composant optique 3 peut être constitué à l'intérieur de la zone S1 par une première lame transparente à faces parallèles, dont l'épaisseur est adaptée pour produire un retard de phase d'environ 2·π/3 dans cette zone S1, pour des rayons lumineux qui traversent la zone S1 et qui sont de couleur rouge, correspondant à des valeurs de longueur d'onde proches de 760 nm (nanomètre). Simultanément, le composant 3 est constitué par une deuxième lame transparente à faces parallèles dans la zone S2, avec une épaisseur de lame qui est adaptée pour produire un retard de phase d'environ 4·π/3 encore pour des rayons lumineux de couleur rouge mais qui traversent la zone S2. Enfin, il est constitué par une troisième lame transparente à faces parallèles dans la zone S3, avec une épaisseur de lame qui est adaptée pour produire un retard de phase d'environ 2·π, ce qui équivaut à un retard de phase sensiblement nul dans cette zone S3, toujours pour des rayons lumineux de couleur rouge mais qui traversent la zone S3. Ces retards de phase, ou déphasages, peuvent être considérés par rapport à une propagation des rayons lumineux de couleur rouge telle que se produisant dans le dispositif d'imagerie en l'absence du composant 3. Alors une source ponctuelle ou quasi-ponctuelle de lumière rouge qui est présente dans le champ optique d'entrée du dispositif d'imagerie apparaît dans chaque image saisie sous la forme de trois taches rapprochées, à l'emplacement de l'image géométrique de cette source dans l'image qui est saisie. Ce motif d'image est désigné par M1 dans la figure 2b. Possiblement, le composant 3 peut être adapté pour que les trois taches du motif d'image M1 soient rapprochées les unes des autres, de sorte que le motif d'image M1 devienne un triangle dont le côté est peu supérieur à la limite de résolution spatiale du dispositif d'imagerie, par exemple une longueur de côté de triangle qui est comprise entre 3 et à 5 pixels. De cette façon, un contraste suffisant peut être maintenu au sein de chaque image qui est saisie par le capteur d'image 2, pour l'objet d'où proviennent les rayons lumineux de couleur rouge.

Si le matériau transparent du composant 3 dans les trois zones S1, S2 et S3 possède une valeur d'indice de réfraction pour une couleur bleue, correspondant à des valeurs de longueur d'onde proches de 380 nm, qui est sensiblement égale à celle pour la couleur rouge, alors le composant 3 produit pour la couleur bleue un retard de phase qui est égal à environ 4·π/3 dans la zone S1, et égal à environ 8·π/3 dans la zone S2, ce qui équivaut à un retard de phase sensiblement égal à 2·π/3 dans cette zone S2, et un retard de phase qui est égal à environ 4·π nul dans la zone S3, équivalent de nouveau à un retard de phase qui est sensiblement nul dans cette zone S3. Le motif d'image qui en résulte pour une source ponctuelle de lumière bleue, et qui apparaît dans chaque image saisie à l'emplacement de l'image géométrique de cette source, est celui représenté dans la figure 2c et désigné par M2. Il s'agit encore de trois taches rapprochées, mais dont l'orientation générale est tournée de π/3 dans chaque image saisie par rapport au motif d'image M1. Les motifs M1 et M2 peuvent aussi apparaître chacun comme des étirements ou décalages de l'image géométrique ponctuelle simultanément selon trois directions qui sont distantes angulairement de π/3.

Ainsi, l'identification du motif d'image M1 dans une image saisie indique que le rayonnement lumineux qui est émis par la source possède une composante de couleur rouge, et l'identification du motif d'image M2 indique qu'il possède une composante de couleur bleue. Une superposition des deux motifs d'image M1 et M2, approximativement sous la forme d'une étoile à six branches, ou d'une tache à six lobes, indique que le rayonnement lumineux qui est émis par la source possède simultanément une composante de couleur rouge et une autre composante de couleur bleue, avec des énergies spectrales respectives qui sont corrélées aux intensités lumineuses respectives des deux motifs d'image M1 et M2 dans la superposition.

Bien que le mode de réalisation qui vient d'être décrit soit à base d'une lame de phase en matériau transparent, l'Homme du métier comprendra à la lecture de la description ci-dessous de modes de réalisation principaux à base de résonateurs électromagnétiques, que les motifs d'image M1 et M2 des figures 2b et 2c peuvent aussi être produits par de tels résonateurs électromagnétiques, lorsque ceux-ci sont choisis convenablement. Pour cela, la zone S1 pourra être dédiée à contenir tous les résonateurs électromagnétiques d'un premier type, qui sont adaptés pour appliquer un déphasage ϕ₁ au rayonnement électromagnétique de couleur rouge et un déphasage ϕ₂ au rayonnement électromagnétique de couleur bleue. Alors, la zone S2 sera dédiée à contenir tous les résonateurs électromagnétiques d'un deuxième type, adaptés pour appliquer un déphasage ϕ₁ +2π/3 au rayonnement de couleur rouge et un déphasage ϕ₂ +4π/3 au rayonnement de couleur bleue. Et la zone S3 sera dédiée à contenir tous les résonateurs électromagnétiques d'un troisième type, adaptés pour appliquer un déphasage ϕ₁ +4π/3 au rayonnement de couleur rouge et un déphasage ϕ₂ +8π/3, ou de façon équivalente ϕ₂ +2π/3, au rayonnement de couleur bleue.

Pour tous les premiers modes de réalisation de l'invention qui viennent d'être décrits en référence aux figures 2a-2c, les parties de la section transversale S qui sont évoquées dans la description générale de l'invention sont confondues une-à-une avec les zones S1-S3.

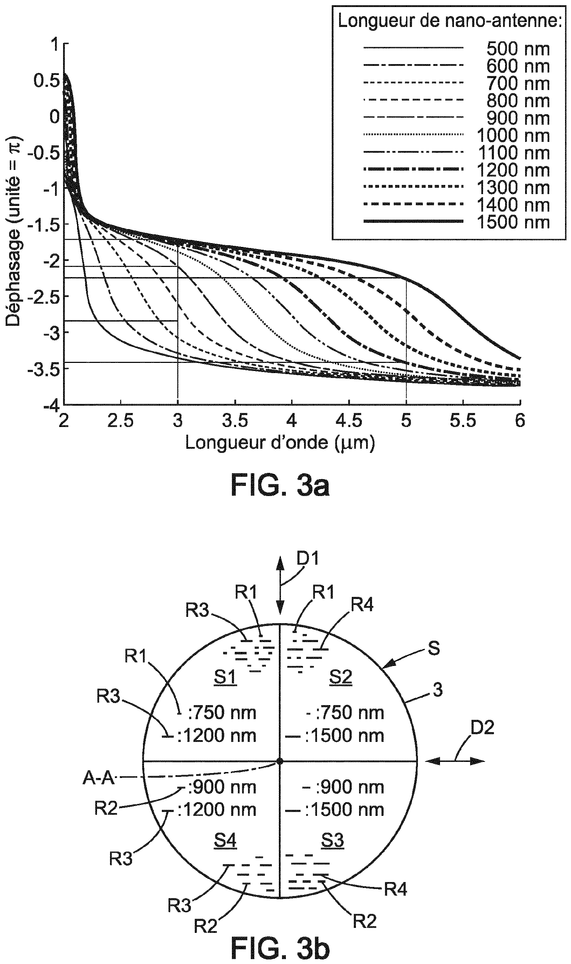

Des seconds modes de réalisation possibles de l'invention sont maintenant décrits en référence aux figures 3a-3h. Dans l'un de ces seconds modes de réalisation, le composant optique 3 est constitué par une répartition de résonateurs électromagnétiques de type nano-antennes métal-isolant-métal (MIM) à l'intérieur de la section transversale S.

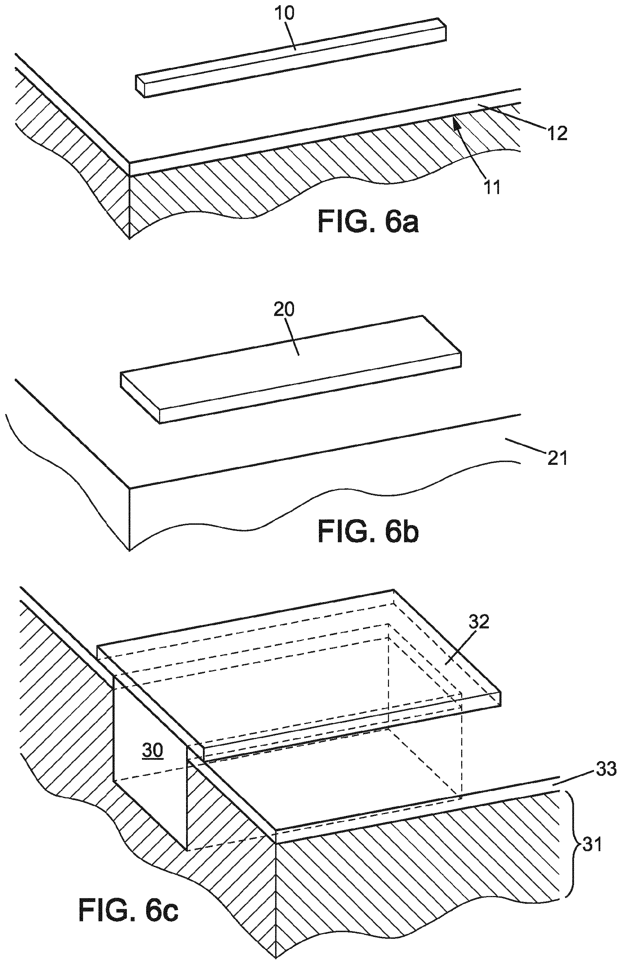

De façon connue, et en référence à la figure 6a, une nano-antenne MIM comprend un segment de matériau métallique 10 qui est disposé parallèlement à une surface métallique continue 11, en étant isolé de celle-ci par un film intermédiaire 12 de matériau isolant. Par exemple, le métal du segment 10 et de la surface continue 11 peut être l'or, et le film intermédiaire 12 peut être en silice (SiO₂) ou en polymère époxy. Une telle nano-antenne constitue un résonateur électromagnétique de type Fabry-Pérot, dont la valeur de longueur d'onde de résonance dépend de la longueur du segment 10, dite longueur de nano-antenne. Dans la suite, chaque segment 10 possède une largeur qui est égale à 400 nm, parallèlement à la surface 11, et une épaisseur égale à 50 nm, perpendiculairement à la surface 11, ces largeur et épaisseur étant constantes pour toutes les nano-antennes MIM considérées. Alors, un composant optique 3 qui est constitué par la surface métallique continue 11, le film de matériau isolant 12 disposé sur celle-ci, et une distribution suffisamment dense de segments métalliques 10 sur le film de matériau isolant 12, d'un côté de celui-ci qui est opposé à la surface métallique continue 11, forme un réflecteur de rayonnement électromagnétique à déphasage ajustable. Ce déphasage, effectif entre le rayonnement qui est réfléchi et le rayonnement incident, varie en fonction de la longueur d'onde du rayonnement et peut être ajusté en sélectionnant la longueur des segments métalliques 10 qui sont présents à l'endroit de la réflexion. La figure 3a montre les variations de ce déphasage, exprimé en unité de π, en fonction de la longueur d'onde du rayonnement électromagnétique, pour des nano-antennes dont les longueurs sont 500 nm, 600 nm,..., 1400 nm et 1500 nm. Pour la figure 3a, le film de matériau isolant 12 est en silice et possède une épaisseur de 300 nm, les segments métalliques 10 sont répartis selon un pas qui est sensiblement égal à 1,8 µm (micromètre) dans deux directions perpendiculaires, et le rayonnement électromagnétique est réfléchi perpendiculairement au réflecteur. Les effets de polarisation du rayonnement ne sont pas décrits ici, étant supposés connus de l'Homme du métier, et pouvant être traités en utilisant des segments métalliques 10 qui sont orientés selon deux directions perpendiculaires dans la section transversale S.

D'après le diagramme de la figure 3a, un premier réflecteur à nano-antennes de 750 nm de longueur et un deuxième réflecteur à nano-antennes de 900 nm de longueur réfléchissent un rayonnement électromagnétique qui possède une longueur d'onde 3 µm (micromètre), avec un écart de déphasage qui est sensiblement égal à 0,75·π. Ces mêmes premier et deuxième réflecteurs réfléchissent un autre rayonnement électromagnétique qui possède une longueur d'onde 5 µm, avec un écart de déphasage qui sensiblement nul. De même, un troisième réflecteur à nano-antennes de 1200 nm de longueur et un quatrième réflecteur à nano-antennes de 1500 nm de longueur réfléchissent le rayonnement électromagnétique de longueur d'onde 3 µm avec un écart de déphasage qui aussi est sensiblement nul, et réfléchissent le rayonnement électromagnétique de longueur d'onde 5 µm avec un écart de déphasage qui est sensiblement égal à 1,25·π.

Alors, le composant optique 3 des seconds modes de réalisation peut être réalisé en divisant la section transversale S du dispositif d'imagerie en quatre zones S1, S2, S3 et S4, par exemple quatre secteurs angulaires chacun à angle droit au sommet, à partir de l'axe optique A-A. Comme indiqué dans la figure 3b, le composant optique 3 peut être obtenu avec une surface métallique et un film isolant qui sont continus dans toute la section transversale S, et en utilisant des nano-antennes de longueurs 750 nm et 1200 nm dans la zone S1, de longueurs 750 nm et 1500 nm dans la zone S2, de longueurs 900 nm et 1500 nm dans la zone S3, et de longueurs 900 nm et 1200 nm dans la zone S4. De telles combinaisons de paires de types de nano-antennes à l'intérieur de chacune des zones S1, S2, S3 et S4 est possible car chaque nano-antenne possède une valeur de section efficace qui est très supérieure à l'aire occupée par le segment métallique 10 de cette nano-antenne à l'intérieur de la section transversale S. Les différents types de nano-antennes sont représentés symboliquement par des tirets de longueurs différentes dans la figure 3b : tirets R1 pour les nano-antennes de longueur 750 nm, tirets R2 pour les nano-antennes de longueur 900 nm, tirets R3 pour les nano-antennes de longueur 1200 nm, et tirets R4 pour les nano-antennes de longueur 1500 nm.

La liaison entre la présente description d'un second mode de réalisation de l'invention et le vocable qui a été utilisé dans la description générale de l'invention est la suivante :
- les deux zones S1 et S2 forment ensemble une première partie de la section transversale S qui est dédiée à contenir toutes les nano-antennes de 750 nm de longueur ;
- de même, les deux zones S2 et S3 forment ensemble une deuxième partie de la section transversale S qui est dédiée à contenir toutes les nano-antennes de 1500 nm de longueur ;
- les deux zones S3 et S4 forment ensemble une troisième partie de la section transversale S qui est dédiée à contenir toutes les nano-antennes de 900 nm de longueur ;
- les deux zones S4 et S1 forment ensemble une quatrième partie de la section transversale S qui est dédiée à contenir toutes les nano-antennes de 1200 nm de longueur ;
- la direction D1 est la direction de la frontière qui sépare les deuxième et quatrième parties de la section transversale S, dite première direction de frontière ; et
- la direction D2, dite seconde direction de frontière, est la direction de la frontière qui sépare les première et troisième parties de la section transversale S.

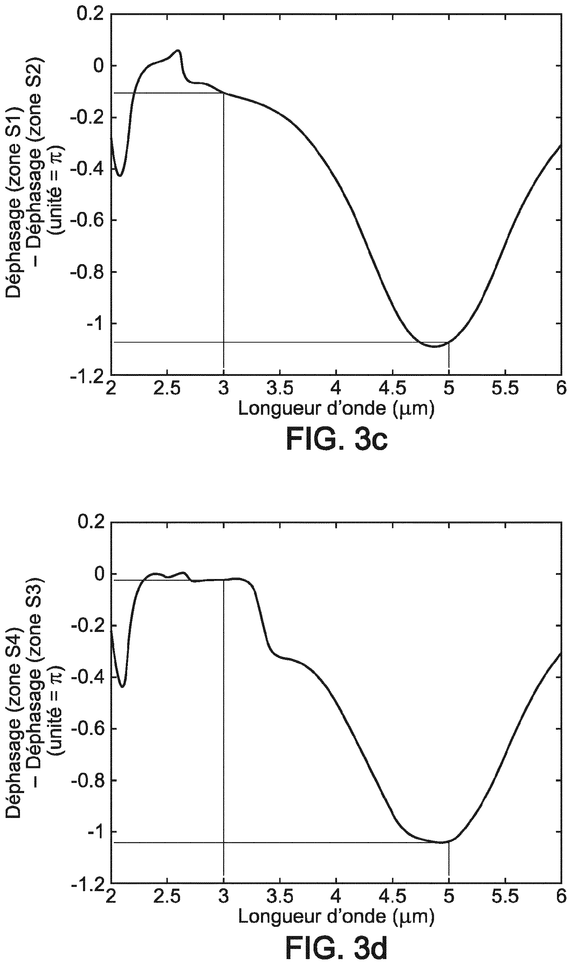

Le diagramme de la figure 3c montre les variations en fonction de la longueur d'onde du rayonnement qui est réfléchi par le composant optique 3, d'un écart de déphasage qui existe entre une première partie du rayonnement qui est réfléchie dans la zone S1 et une deuxième partie du rayonnement qui est réfléchie dans la zone S2. D'après le diagramme de la figure 3c, le rayonnement de longueur d'onde 3 µm subit un écart de déphasage qui est sensiblement nul entre les zones S1 et S2, et le rayonnement de longueur d'onde 5 µm subit un écart de déphasage qui est sensiblement égal à (-)π entre ces mêmes deux zones S1 et S2. Ces valeurs précises d'écarts de déphasage aux longueurs d'onde de 3 µm et 5 µm, entre zones adjacentes, sont obtenues grâce à l'association de deux types différents de nano-antennes dans chaque zone.

Le diagramme de la figure 3d montre les variations en fonction de la longueur d'onde du rayonnement qui est réfléchi par le composant optique 3, d'un écart de déphasage qui existe entre une quatrième partie du rayonnement qui est réfléchie dans la zone S4 et une troisième partie du rayonnement qui est réfléchie dans la zone S3. D'après le diagramme de la figure 3d, le rayonnement de longueur d'onde 3 µm subit un écart de déphasage qui est de nouveau sensiblement nul, mais maintenant entre les zones S3 et S4, et le rayonnement de longueur d'onde 5 µm subit un écart de déphasage qui est de nouveau sensiblement égal à (-)π, entre ces mêmes deux zones S3 et S4.

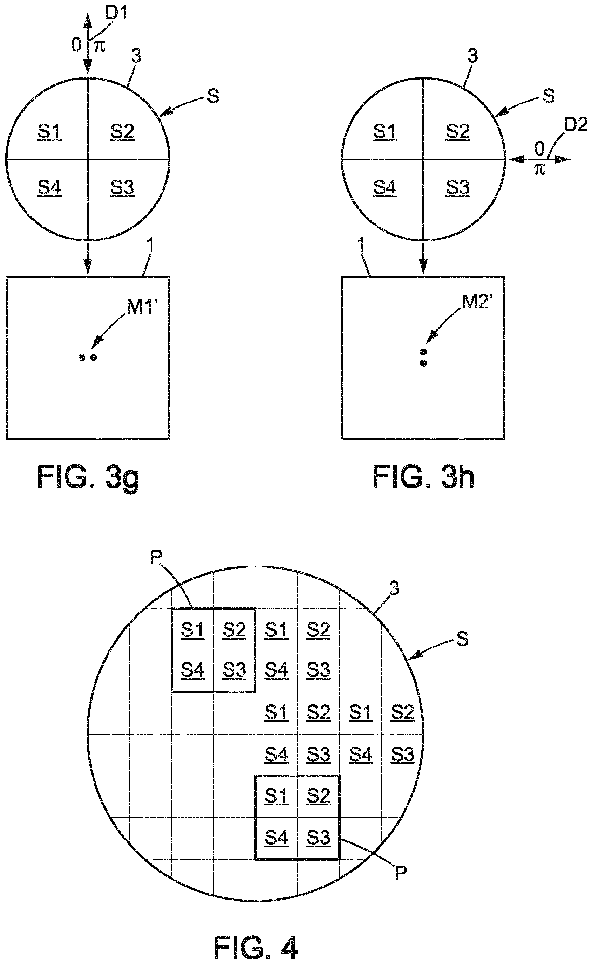

Il résulte alors des figures 3b, 3c et 3d que le composant optique 3 provoque un écart de déphasage, entre les deux côtés de la frontière entre les zones S1 et S2, qui se prolonge rectilignement entre les zones S3 et S4, qui est sensiblement nul pour le rayonnement de longueur d'onde 3 µm, et sensiblement égal à π pour le rayonnement de longueur d'onde 5 µm. Par conséquent, le composant optique 3 produit un étirement ou un dédoublement de l'image d'une source ponctuelle ou quasi ponctuelle, perpendiculairement à la direction de frontière D1, pour une première couleur de rayonnement correspondant à la longueur d'onde de 5 µm mais pas pour une seconde couleur de rayonnement correspondant à la longueur d'onde de 3 µm. Le motif d'image de la figure 3g, noté M1' et dit premier motif d'image, est donc associé à la première couleur qui correspond à la longueur d'onde de 5 µm.

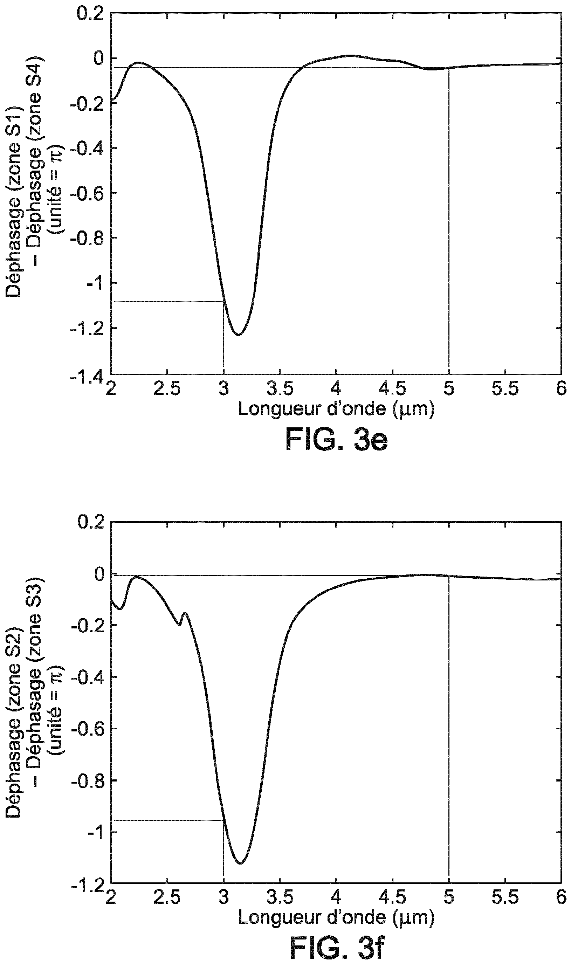

Le diagramme de la figure 3e montre les variations en fonction de la longueur d'onde du rayonnement qui est réfléchi par le composant optique 3, de l'écart de déphasage qui existe entre la première partie du rayonnement qui est réfléchie dans la zone S1 et la quatrième partie du rayonnement qui est réfléchie dans la zone S4. D'après le diagramme de la figure 3e, le rayonnement de longueur d'onde 3 µm subit un écart de déphasage qui est sensiblement égal à (-)π entre les zones S1 et S4, et le rayonnement de longueur d'onde 5 µm subit un écart de déphasage qui est sensiblement nul entre ces mêmes deux zones S1 et S4.

Le diagramme de la figure 3f montre les variations en fonction de la longueur d'onde du rayonnement qui est réfléchi par le composant optique 3, de l'écart de déphasage qui existe entre la deuxième partie du rayonnement qui est réfléchie dans la zone S2 et la troisième partie du rayonnement qui est réfléchie dans la zone S3. D'après le diagramme de la figure 3f, le rayonnement de longueur d'onde 3 µm subit un écart de déphasage qui est de nouveau sensiblement égal à (-)π entre les zones S2 et S3, et le rayonnement de longueur d'onde 5 µm subit un écart de déphasage qui est de nouveau sensiblement nul entre ces mêmes deux zones S2 et S3.

Il résulte alors des figures 3b, 3e et 3f que le composant optique 3 provoque un écart de déphasage, entre les deux côtés de la frontière entre les zones S1 et S4, qui se prolonge rectilignement entre les zones S2 et S3, qui est sensiblement égal à π pour le rayonnement de longueur d'onde 3 µm, et sensiblement nul pour le rayonnement de longueur d'onde 5 µm. Par conséquent, le composant optique 3 produit un étirement ou un dédoublement de l'image d'une source ponctuelle ou quasi ponctuelle, perpendiculairement à la direction de frontière D2, pour la seconde couleur de rayonnement correspondant à la longueur d'onde de 3 µm mais pas pour la première couleur de rayonnement correspondant à la longueur d'onde de 5 µm. Le motif d'image de la figure 3h, noté M2' et dit second motif d'image, est donc associé à la seconde couleur qui correspond à la longueur d'onde de 3 µm.

D'autres modes de réalisation de l'invention peuvent être conçus, notamment sur le modèle de celui des figures 3b-3h, en remplaçant les résonateurs électromagnétiques à nano-antennes MIM par des résonateurs électromagnétiques à nano-bâtonnets métalliques sur support isolant et transparent. Par exemple, conformément à la figure 6b, un nano-bâtonnet d'or 20 qui est disposé sur un support en silice 21 peut être utilisé pour former chaque résonateur électromagnétique. Pour de tels résonateurs à nano-bâtonnets métalliques, la résonance est due à l'apparition de plasmons de surface lorsque la longueur d'onde du rayonnement incident correspond à une combinaison des dimensions du nano-bâtonnet. Le composant optique 3 qui est ainsi obtenu est alors fonctionnel en transmission pour les rayons lumineux qui forment l'image saisie par le capteur 2. Le déphasage qui est produit pour le rayonnement électromagnétique transmis par le composant 3 dépend alors des dimensions de chaque nano-bâtonnet dans chacune des zones S1-S4, et aussi de la longueur d'onde du rayonnement. L'Homme du métier pourra alors se reporter aux articles scientifiques qui sont disponibles au sujet de tels résonateurs électromagnétiques pour obtenir des versions des diagrammes des figures 3c-3f relatives à des résonateurs à nano-bâtonnets sur support isolant et transparent. A partir de tels diagrammes, la méthode qui a été présentée pour les résonateurs à nano-antennes MIM pour concevoir un composant optique capable de révéler deux couleurs, en sélectionnant convenablement les valeurs des paramètres des résonateurs, peut être transposée facilement aux résonateurs à nano-bâtonnets.

D'autres modes de réalisation de l'invention peuvent encore être conçus, en utilisant des résonateurs électromagnétiques de type résonateurs de Helmholtz à la place des nano-antennes MIM. Comme illustré par la figure 6c, de tels résonateurs de Helmholtz sont formés chacun en combinant une nano-cavité 30 qui est aménagée dans une surface métallique commune 31, avec une portion métallique additionnelle 32 qui obture en partie la nano-cavité 30 tout en étant isolée électriquement de la surface métallique commune 31. Par exemple, un film de matériau isolant 33, par exemple un film de silice, peut être intermédiaire entre chaque portion métallique additionnelle 32 et la surface métallique commune 31. La surface métallique commune 31 sert de réflecteur de base, et les résonateurs de Helmholtz en modifient les caractéristiques de réflexion d'une façon qui dépend de la longueur d'onde du rayonnement incident. La surface métallique 31 et le film de matériau isolant 33 peuvent être communs à tous les résonateurs de Helmholtz, chacun ayant une nano-cavité 30 et une portion métallique additionnelle 32 séparément des autres résonateurs. Au sein de chaque résonateur de Helmholtz, la nano-cavité 30 possède un comportement inductif, et la portion métallique additionnelle 32 forme un condensateur avec la surface métallique 31 autour de la nano-cavité. De façon connue, chaque résonateur de Helmholtz qui est ainsi constitué présente une résonance de réflexion pour le rayonnement électromagnétique qui est incident, dont les caractéristiques de longueur d'onde de résonance et de déphasage en fonction de la longueur d'onde du rayonnement incident dépendent des dimensions de la nano-cavité, de celles de la portion métallique additionnelle et de l'épaisseur du film isolant 33 entre la portion métallique additionnelle 32 et le bord périphérique de la nano-cavité 30. De même que précédemment, l'Homme du métier sera capable de transposer le second mode de réalisation à base de nano-antennes MIM qui a été décrit en référence aux figures 3b-3h, à un mode de réalisation de l'invention à base de résonateurs de Helmholtz.

D'une façon qui est aussi connue de l'Homme du métier, les caractéristiques de résonance des résonateurs électromagnétiques, tels que ceux qui viennent d'être cités - nano-antennes MIM, nano-bâtonnets, résonateurs de Helmholtz - varient en fonction de la polarisation du rayonnement électromagnétique incident. Il est alors possible d'obtenir un composant optique 3 qui ne soit efficace que pour du rayonnement incident qui est polarisé selon une direction fixée, celle-ci étant déterminée par la forme et l'orientation des résonateurs dans la section transversale S. Alternativement, il est aussi possible d'obtenir un composant optique 3 qui soit efficace de la même façon pour deux polarisations perpendiculaires, en associant dans chaque zone de la section transversale S des résonateurs qui sont d'un même type mais qui sont orientés certains pour l'une des directions de polarisation du rayonnement incident et d'autres pour la direction de polarisation perpendiculaire.

Il est aussi possible de produire des motifs d'image qui sont différents de ceux M1 (figure 2b), M2 (figure 2c), M1 ' (figure 3g) et M2' (figure 3h), en tant que révélateurs de couleurs dans le rayonnement incident, en augmentant le nombre de zones dans la partition de la section transversale S du dispositif d'imagerie. En particulier, adopter plus de quatre secteurs angulaires peut permettre de produire des étirements ou dédoublements d'images de sources ponctuelles selon plus de directions différentes dans l'image qui est saisie, et ainsi révéler plus de couleurs qui sont séparées spectralement. Il est encore possible d'adopter des formes de zones autres que des secteurs angulaires, et de sélectionner des valeurs d'écarts de déphasage entre des zones voisines, autres que 0 et π. L'Homme du métier comprendra donc qu'un motif d'image quelconque peut être associé à une couleur qui doit être recherchée dans le rayonnement qui est émis par une source ponctuelle ou quasi-ponctuelle, en créant une distribution de déphasage appropriée, effective pour le rayonnement de cette couleur, à travers la section transversale S du dispositif d'imagerie.

Dans encore d'autres modes de réalisation possibles de l'invention, le composant optique 3 peut être conçu pour produire un vortex de déphasage pour le rayonnement qui est transmis ou réfléchi par ce composant 3. Alors le motif d'image dans chaque image qui est saisie est un anneau lumineux, dont le rayon dépend de la longueur d'onde du rayonnement qui est émis par l'objet formant source lumineuse ponctuelle ou quasi-ponctuelle, et pour laquelle le vortex est continu.

Pour les modes de réalisation de l'invention qui ont été décrits ci-dessus, la portion de la section transversale S telle qu'introduite dans la description générale de l'invention, correspond à la section transversale entière du dispositif d'imagerie. Mais dans certaines circonstances, notamment lorsque l'objectif 1 est du type grand-angle ou fish-eye, il peut être avantageux de répéter le motif de déphasage dans la section transversale S afin qu'un faisceau lumineux qui provient de n'importe quelle direction à l'intérieur du champ optique d'entrée et qui forme l'image d'un objet sur le capteur d'image 2, soit affecté par le motif entier de déphasage. Dans la figure 4, le motif de déphasage à quatre zones S1-S4 est limité à l'intérieur d'un carré P qui est plus petit que la section transversale S entière, et ce motif carré aux quatre zones S1-S4 est répété pour former un pavage de la section transversale S. Pour cette variante de réalisation de l'invention, chaque carré P qui constitue une répétition du motif de déphasage est une portion de la section transversale S au sens de la description générale de l'invention.

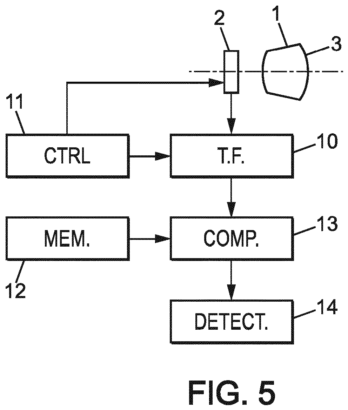

En référence à la figure 5, un système de détection et/ou de surveillance qui est constitué à partir d'un dispositif d'imagerie et d'information spectroscopique conforme à l'invention, peut comprendre en outre des moyens d'activation («driver means» en anglais), d'analyse d'image et de détection d'objets qui seraient présents dans le champ optique d'entrée. Les moyens d'analyse d'image, référencés 10, peuvent être adaptés pour réaliser une transformation de Fourier de chaque image qui est saisie par le capteur 2 en présence du composant optique 3. En effet, une telle analyse par transformation de Fourier peut être particulièrement efficace pour révéler la présence, dans chaque image saisie, d'un motif d'image qui est associé à une couleur recherchée dans le rayonnement qui a formé cette image. Une sortie des moyens d'analyse 10 peut être une indication de présence ou d'absence de chaque couleur recherchée dans tout ou partie du champ optique d'entrée, et éventuellement avec une indication d'intensité pour le rayonnement de cette couleur. Des moyens de comparaison 13 peuvent ensuite être prévus pour comparer les indications spectroscopiques qui sont fournies par les moyens d'analyse 10, pour chaque image saisie ou un échantillon de celles-ci, avec des critères spectroscopiques qui sont mémorisés dans un module de mémoire 12. Lorsque les critères mémorisés dans le module 12 caractérisent une menace, par exemple lorsqu'ils correspondent à un rayonnement thermique qui est susceptible d'être produit par le réacteur d'un missile, un module de détection 14 peut être prévu pour produire un signal d'alarme approprié. Pour réduire encore la probabilité de fausse alarme d'un tel système de surveillance par imagerie et information spectroscopique, il est possible de corréler en plus la détection, dans l'une au moins des images, d'un objet qui satisfait les critères spectroscopiques mémorisés avec une caractérisation d'un déplacement de cet objet qui apparaît entre des images saisies successivement. En particulier, un système tel qu'illustré par la figure 5 peut être un détecteur de départ de missile, ou DDM.

De façon connue de l'Homme du métier, l'ensemble des composants du système de détection et/ou de surveillance est piloté et synchronisé par le contrôleur 11, qui constitue les moyens d'activation.

De façon générale, il n'est pas nécessaire pour mettre en oeuvre l'invention que l'image de l'objet par le dispositif d'imagerie soit inférieure à la limite de résolution spatiale de ce dispositif. En effet, des traitements d'image peuvent être utilisés, qui fournissent la fonction d'étalement du point (ou FED), ou des caractéristiques suffisantes de cette fonction, à partir de l'image d'un objet qui est plus gros, ou beaucoup plus gros, que la limite de résolution spatiale du dispositif. Autrement dit, le motif d'imagerie qui est caractéristique d'une couleur en utilisant l'invention, peut être extrait de l'image d'un objet même si cet objet est résolu spatialement. Dans ce cas, le dispositif de l'invention cumule une fonction d'imagerie usuelle, sans filtrage colorimétrique, avec une fonction de détection de couleur qui est apportée par le composant optique à fonction de différenciation spectrale. Autrement dit, une fonction d'imagerie en couleur est obtenue par l'invention, sans utiliser de filtres de couleurs ni de séparation du chemin optique en plusieurs voies spectrales à l'intérieur du dispositif.

L'invention peut aussi être reproduite en modifiant de nombreuses caractéristiques secondaires par rapport aux modes de réalisation qui ont été décrits en détail ci-dessus. Par exemple, les zones dans la section transversale S ne sont pas nécessairement des secteurs angulaires ou des réunions de secteurs angulaires. Elles peuvent avoir des formes géométriques quelconques, symétriques ou non, étant entendu que leurs surfaces respectives limitent la fraction du rayonnement incident qui est soumise à chaque valeur de déphasage produite par le composant optique à fonction de différenciation spectrale.

Enfin, il est rappelé que l'invention n'est pas limitée à la détection de menaces qui seraient susceptibles d'apparaître à l'intérieur d'un champ de surveillance, et qu'elle peut être appliquée à de multiples autres applications, y compris la télédétection satellitale, la détection d'oiseaux à l'intérieur une zone aéroportuaire, etc.

## Revendications

1. Dispositif d'imagerie et d'information spectroscopique, comprenant :
- un objectif (1), adapté pour former dans un plan focal une image d'une scène qui est contenue dans un champ optique d'entrée du dispositif d'imagerie ;
- un capteur d'image (2), qui est disposé dans le plan focal pour saisir l'image de la scène ; et
- au moins un composant optique (3) à fonction de différenciation spectrale, qui est placé sur un trajet de rayons lumineux entre la scène et le plan focal, ledit composant optique étant adapté pour modifier une image d'un point de la scène lorsque l'objectif (1) est pourvu dudit composant optique, par rapport à l'image du même point de la scène telle que formée par l'objectif dépourvu dudit composant optique, de façons différentes pour au moins deux couleurs possibles pour les rayons lumineux qui proviennent du point de la scène, de sorte qu'une forme de l'image du point de la scène, qui apparaît dans l'image telle que saisie par le capteur d'image (2), fournisse une information spectroscopique sur ledit point de la scène,
le dispositif étant **caractérisé en ce que** le composant optique (3) à fonction de différenciation spectrale est adapté pour déphaser des rayons lumineux qui proviennent d'un même point de la scène mais qui traversent deux parties différentes d'une section transversale (S) du dispositif, conformément à un premier écart de déphasage effectif entre lesdites deux parties pour une première couleur possible pour lesdits rayons lumineux, et conformément à un second écart de déphasage effectif aussi entre les deux mêmes parties mais pour une seconde couleur possible pour lesdits rayons lumineux, les première et seconde couleurs étant séparées spectralement, et les premier et second écarts de déphasage étant différents,
le déphasage qui est appliqué par le composant optique (3) aux rayons d'une même couleur étant constant spatialement à l'intérieur d'une même partie de la section transversale (S),
et **en ce que** le composant optique (3) à fonction de différenciation spectrale comporte des résonateurs (R1-R4) électromagnétiques identiques qui sont efficaces chacun pour déphaser et/ou atténuer de façon variable des rayons lumineux lorsqu'une couleur desdits rayons lumineux varie par rapport à une longueur d'onde de résonance de chaque résonateur, lesdits résonateurs identiques étant répartis dans l'une des parties de la section transversale (S) du dispositif, à l'exclusion d'au moins une autre des parties de ladite section transversale du dispositif.

2. Dispositif selon la revendication 1, dans lequel le composant optique (3) à fonction de différenciation spectrale est adapté pour modifier l'image du point de la scène selon un premier motif d'image (M1 ; M1') pour des rayons lumineux d'une première couleur qui proviennent dudit point de la scène, et pour modifier l'image du point de la scène selon un second motif d'image (M2 ; M2') pour des rayons lumineux d'une seconde couleur qui proviennent dudit point de la scène, les première et seconde couleurs étant séparées spectralement, et les premier et second motifs d'image étant différents.

3. Dispositif selon la revendication 1 ou 2, suivant lequel le composant optique (3) à fonction de différenciation spectrale est adapté pour étirer, décaler ou dédoubler l'image du point de la scène, dans l'image telle que saisie par le capteur d'image (2), selon des directions d'étirement, de décalage ou de dédoublement qui sont différentes entre les deux couleurs possibles pour les rayons lumineux qui proviennent du point de la scène.

4. Dispositif selon l'une quelconque des revendications précédentes, dans lequel le composant optique (3) à fonction de différenciation spectrale comporte des résonateurs électromagnétiques (R1-R4) de plusieurs types différents, correspondant à des longueurs d'onde de résonance qui sont différentes entre des résonateurs de types différents, ou correspondant à des valeurs de déphasage relatives à une même longueur d'onde qui sont différentes entre des résonateurs de types différents,
et dans lequel les résonateurs de chaque type sont contenus dans une partie de la section transversale (S) du dispositif qui présente au moins un bord dont une orientation, à l'intérieur de ladite section transversale du dispositif, est différente de l'orientation d'au moins un bord de chaque autre partie de la section transversale du dispositif qui contient des résonateurs d'un autre type.

5. Dispositif selon la revendication 4, dans lequel le composant optique (3) comporte N types de résonateurs électromagnétiques (R1-R4), N étant un entier naturel compris entre 1 et 33, et dans lequel une portion de la section transversale (S) du dispositif est divisée en N zones à partir d'un point central de la portion de section transversale, et chaque partie de la section transversale du dispositif, qui est dédiée à contenir tous les résonateurs électromagnétiques d'un des types, est constituée à l'intérieur de la portion de section transversale par une sélection d'une ou plusieurs des zones, ladite sélection étant spécifique audit type de résonateurs par rapport aux autres types de résonateurs.

6. Dispositif selon la revendication 5, dans lequel N est égal à 3, et la portion de la section transversale (S) du dispositif est divisée en des première, deuxième et troisième zones,
les résonateurs électromagnétiques de premier, deuxième et troisième types étant contenus séparément dans les première, deuxième et troisième zones, avec un seul des types de résonateurs électromagnétiques par zone,
et les résonateurs électromagnétiques étant adaptés pour produire des écarts de déphasage qui sont égaux à 2·π/3 ±π/4 pour une première couleur en passant d'une des zones à une autre selon un parcours orienté dans la portion de section transversale (S), et égaux à 4·π/3 ±π/4 pour une seconde couleur en passant d'une des zones à une autre selon le même parcours orienté dans la portion de section transversale, lesdites première et seconde couleurs étant séparées spectralement.

7. Dispositif selon la revendication 5, dans lequel N est égal à 4, la portion de la section transversale (S) du dispositif est divisée en des première (S1), deuxième (S2), troisième (S3) et quatrième (S4) zones,
les résonateurs électromagnétiques de premier (R1), deuxième (R2), troisième (R3) et quatrième (R4) types étant contenus dans les première, deuxième, troisième et quatrième zones avec deux types de résonateurs électromagnétiques par zone, et en variant un seul type de résonateurs électromagnétiques entre deux zones qui sont voisines à l'intérieur de la portion de section transversale (S),
et les résonateurs électromagnétiques étant adaptés pour produire des écarts de déphasage qui sont égaux à :
π ±π/4 pour une première couleur entre celles des zones qui sont séparées selon une première direction de frontière (D1) à l'intérieur de la portion de section transversale (S) ;
0 ±π/4 pour ladite première couleur entre celles des zones qui sont séparées selon une seconde direction de frontière (D2) différente de ladite première direction de frontière (D1) à l'intérieur de la portion de section transversale (S) ;
π ±π/4 pour une seconde couleur entre celles des zones qui sont séparées selon la seconde direction de frontière (D2) à l'intérieur de la portion de section transversale (S), les première et seconde couleurs étant séparées spectralement ;et
0 ±π/4 pour ladite seconde couleur entre celles des zones qui sont séparées selon la première direction de frontière (D1) à l'intérieur de la portion de section transversale (S).

8. Dispositif selon l'une quelconque des revendications 5 à 7, dans lequel un motif (P) qui est formé par les zones contenues dans la portion de la section transversale (S) du dispositif, avec les résonateurs électromagnétiques qui sont contenus dans chacune desdites zones, est répété dans la section transversale du dispositif de façon à former un pavage de ladite section transversale.

9. Dispositif selon l'une quelconque des revendications précédentes, dans lequel chaque résonateur électromagnétique (R1-R4) est une nano-antenne de type métal-isolant-métal (10, 11, 12), et le composant optique (3) à fonction de différenciation spectrale est utilisé pour réfléchir les rayons lumineux à l'intérieur du dispositif,
ou est un nano-bâtonnet métallique (20) qui est disposé sur un support transparent (21), et le composant optique (3) à fonction de différenciation spectrale est utilisé pour transmettre les rayons lumineux à travers ledit support transparent à l'intérieur du dispositif,
ou est une cavité (30) ou une portion d'un matériau diélectrique qui est comprise entre au moins deux portions conductrices électriquement (31, 32), et qui forme un résonateur de Helmholtz efficace en réflexion pour un rayonnement électromagnétique incident sur ladite cavité ou portion de matériau diélectrique, et le composant optique (3) à fonction de différenciation spectrale est utilisé pour réfléchir les rayons lumineux à l'intérieur du dispositif.

10. Dispositif selon l'une quelconque des revendications précédentes, dans lequel le composant optique (3) à fonction de différenciation spectrale est disposé sur une face optique (1a) d'une lentille de l'objectif (1), ou forme une face optique réfléchissante de l'objectif, dans les deux cas de préférence une face optique d'entrée dudit objectif.

11. Dispositif selon l'une quelconque des revendications précédentes, comprenant en outre des moyens (10) d'analyse de l'image de la scène qui est saisie par le capteur d'image (2), lesdits moyens d'analyse étant adaptés pour appliquer un traitement par transformation de Fourier à ladite image de la scène, et pour produire l'information spectroscopique à partir d'un résultat du traitement par transformation de Fourier.

12. Dispositif selon la revendication 11, compris dans un système de surveillance optique, dans lequel l'objectif (1) est d'un type grand-angle ou fish-eye, c'est-à-dire avec un angle d'ouverture du champ optique d'entrée qui est supérieur à 120°, et le dispositif comprend en outre :
- des moyens d'activation (11), qui sont adaptés pour commander des saisies d'images successives par le capteur d'image (2) lorsque l'objectif (1) est pourvu du composant optique (3) à fonction de différenciation spectrale, et pour commander les moyens d'analyse (10) de façon à fournir l'information spectroscopique pour au moins un point de la scène à partir de chaque image saisie ;
- des moyens de mémoire (12), qui sont adaptés pour mémoriser au moins un critère spectroscopique ;
- des moyens de comparaison (13), qui sont agencés pour comparer avec le critère mémorisé, l'information spectroscopique fournie pour le point de la scène à partir d'au moins une des images saisies ; et
- des moyens de détection (14), qui sont adaptés pour produire un message de détection positive lorsque l'information spectroscopique qui est obtenue pour le point de la scène correspond au critère mémorisé.

## Patentansprüche

1. Vorrichtung zur Bildgebung und für spektroskopische Informationen, umfassend:
- ein Objektiv (1), das angepasst ist, um in einer Brennebene ein Bild einer Szene zu erzeugen, die in einem optischen Eingangsfeld der Vorrichtung zur Bildgebung enthalten ist;
- einen Bildsensor (2), der in der Brennebene angeordnet ist, um das Bild der Szene zu erfassen; und
- mindestens eine optische Komponente (3) mit spektraler Differenzierungsfunktion, die auf einem Lichtstrahlengang zwischen der Szene und der Brennebene angeordnet ist, wobei die optische Komponente angepasst ist, um ein Bild eines Punkts der Szene zu modifizieren, wenn das Objektiv (1) mit der optischen Komponente ausgestattet ist, in Bezug auf das Bild desselben Punktes der Szene, wie es durch das Objektiv ohne die optische Komponente gebildet wird, auf unterschiedliche Weisen für mindestens zwei mögliche Farben für die Lichtstrahlen, die von dem Punkt der Szene her kommen, so dass eine Form des Bildes des Punkts der Szene, das in dem durch den Bildsensor (2) erfassten Bild erscheint, spektroskopische Informationen über diesen Punkt der Szene liefert,
wobei die Vorrichtung **dadurch gekennzeichnet ist, dass** die optische Komponente (3) mit spektraler Differenzierungsfunktion angepasst ist, um zwischen Lichtstrahlen, die von demselben Punkt der Szene her kommen, aber durch zwei verschiedene Teile eines Querschnitts (S) der Vorrichtung hindurchgehen, einen Phasenunterschied zu erzeugen, gemäß einem ersten effektiven Phasenversatz zwischen den beiden Teilen für eine erste mögliche Farbe für die Lichtstrahlen, und gemäß einem zweiten effektiven Phasenversatz auch zwischen denselben beiden Teilen, aber für eine zweite mögliche Farbe für die Lichtstrahlen, wobei die erste und die zweite Farbe spektral getrennt sind, und wobei der erste und der zweite Phasenversatz verschieden sind,
wobei der Phasenunterschied, der durch die optische Komponente (3) auf die Strahlen einer gleichen Farbe angewendet wird, im Inneren eines gleichen Teils des Querschnitts (S) räumlich konstant ist,
und dadurch, dass die optische Komponente (3) mit spektraler Differenzierungsfunktion identische elektromagnetische Resonatoren (R1-R4) umfasst, die jeweils wirksam sind, um in variabler Weise die Lichtstrahlen zu dämpfen und/oder zwischen diesen einen Phasenunterschied zu erzeugen, wenn eine Farbe der Lichtstrahlen in Bezug auf eine Resonanz-Wellenlänge jedes Resonators variiert, wobei die identischen Resonatoren in einem der Teile des Querschnitts (S) der Vorrichtung unter Ausschluss von mindestens einem anderen der Teile des Querschnitts der Vorrichtung verteilt sind.

2. Vorrichtung nach Anspruch 1, wobei die optische Komponente (3) mit spektraler Differenzierungsfunktion dazu eingerichtet ist, das Bild des Punkts der Szene für Lichtstrahlen einer ersten Farbe, die von dem Punkt der Szene her kommen, gemäß einem ersten Bildmuster (M1; M1') zu modifizieren, und um das Bild des Punkts der Szene für Lichtstrahlen einer zweiten Farbe, die von dem Punkt der Szene her kommen, gemäß einem zweiten Bildmuster (M2; M2') zu modifizieren, wobei die erste und die zweite Farbe spektral getrennt sind, und wobei das erste und das zweite Bildmuster verschieden sind.

3. Vorrichtung nach Anspruch 1 oder 2, wobei die optische Komponente (3) mit spektraler Differenzierungsfunktion angepasst ist, das Bild des Punkts der Szene in dem vom Bildsensor (2) erfassten Bild zu strecken, zu verschieben oder zu verdoppeln, gemäß Streck-, Verschiebungs- oder Verdopplungsrichtungen, die zwischen den beiden möglichen Farben für die Lichtstrahlen, die vom Punkt der Szene her kommen, unterschiedlich sind.

4. Vorrichtung nach einem der vorhergehenden Ansprüche, wobei die optische Komponente (3) mit spektraler Differenzierungsfunktion elektromagnetische Resonatoren (R1-R4) mehrerer unterschiedlicher Typen umfasst, entsprechend Resonanzwellenlängen, die zwischen Resonatoren unterschiedlicher Typen unterschiedlich sind, oder entsprechend Phasenunterschiedswerten bezüglich derselben Wellenlänge, die sich zwischen Resonatoren verschiedener Typen unterscheiden,
und wobei die Resonatoren jedes Typs in einem Teil des Querschnitts (S) der Vorrichtung enthalten sind, der mindestens einen Rand aufweist, für den eine Ausrichtung innerhalb des Querschnitts der Vorrichtung von der Ausrichtung mindestens eines Rands jedes anderen Teils des Querschnitts der Vorrichtung, der Resonatoren eines anderen Typs enthält, verschieden ist.

5. Vorrichtung nach Anspruch 4, wobei die optische Komponente (3) N Typen von elektromagnetischen Resonatoren (R1-R4) umfasst, wobei N eine natürliche Zahl von mindestens 1 und nicht größer als 33 ist, und bei der ein Abschnitt des Querschnitts (S) der Vorrichtung ausgehend von einem zentralen Punkt des Abschnitts des Querschnitts in N Zonen unterteilt ist, und jeder Teil des Querschnitts der Vorrichtung, der dazu bestimmt ist, alle elektromagnetischen Resonatoren eines der Typen aufzunehmen, im Inneren des Abschnitts des Querschnitts durch eine Auswahl einer oder mehrerer der Zonen gebildet ist, wobei die Auswahl für den Resonator-Typ in Bezug auf andere Resonator-Typen spezifisch ist.

6. Vorrichtung nach Anspruch 5, wobei N gleich 3 ist, und der Abschnitt des Querschnitts (S) der Vorrichtung in eine erste, zweite und dritte Zone unterteilt ist, wobei die elektromagnetischen Resonatoren des ersten, zweiten und dritten Typs getrennt in der ersten, zweiten und dritten Zone enthalten sind, mit nur einem Typ von elektromagnetischen Resonatoren pro Zone, und wobei die elektromagnetischen Resonatoren angepasst sind, um Phasenversätze zu erzeugen, die für eine erste Farbe gleich 2·π/3 ± π/4 sind, beim Übergang von einer der Zonen zu einer anderen entlang eines orientierten Wegs in dem Abschnitt des Querschnitts (S), und gleich 4·π/3 ± π/4 für eine zweite Farbe, beim Übergang von einer der Zonen zu einer anderen entlang des gleichen orientierten Wegs in dem Abschnitt des Querschnitts, wobei die erste und zweite Farbe spektral getrennt sind.

7. Vorrichtung nach Anspruch 5, wobei N gleich 4 ist, der Abschnitt des Querschnitts (S) der Vorrichtung in eine erste (S1), eine zweite (S2), eine dritte (S3) und eine vierte (S4) Zone unterteilt ist,
wobei die elektromagnetischen Resonatoren des ersten (R1), zweiten (R2), dritten (R3) und vierten (R4) Typs in der ersten, zweiten, dritten und vierten Zone mit zwei Typen von elektromagnetischen Resonatoren pro Zone enthalten sind, wobei nur ein Typ von elektromagnetischen Resonatoren zwischen zwei benachbarten Zonen innerhalb des Abschnitts des Querschnitts (S) variiert,
und die elektromagnetischen Resonatoren angepasst sind, um Phasenversätze zu erzeugen, die gegeben sind durch:
π ± π/4 für eine erste Farbe zwischen denjenigen Zonen, die entlang einer ersten Grenzrichtung (D1) innerhalb des Abschnitts des Querschnitts (S) getrennt sind;
0 ± π/4 für die erste Farbe zwischen denjenigen Zonen, die entlang einer zweiten Grenzrichtung (D2), die sich von der ersten Grenzrichtung (D1) unterscheidet, innerhalb des Abschnitts des Querschnitts (S) getrennt sind;
π ± π/4 für eine zweite Farbe zwischen denjenigen Zonen, die entlang der zweiten Grenzrichtung (D2) innerhalb des Abschnitts des Querschnitts (S) getrennt sind, wobei die erste und die zweite Farbe spektral getrennt sind; und
0 ± π/4 für die zweite Farbe zwischen denjenigen Zonen, die entlang der ersten Grenzrichtung (D1) innerhalb des Abschnitts des Querschnitts (S) getrennt sind.

8. Vorrichtung nach einem der Ansprüche 5 bis 7, bei der ein Muster (P), das durch die Zonen gebildet ist, die in dem Abschnitt des Querschnitts (S) der Vorrichtung enthalten sind, mit den elektromagnetischen Resonatoren, die in jeder der Zonen enthalten sind, im Querschnitt der Vorrichtung so wiederholt wird, dass eine Pflasterung des Querschnitts gebildet wird.

9. Vorrichtung nach einem der vorhergehenden Ansprüche, wobei jeder elektromagnetische Resonator (R1-R4) eine Nano-Antenne vom Metall-Isolator-Metall-Typ (10, 11, 12) ist, und die optische Komponente (3) mit spektraler Differenzierungsfunktion zur Reflexion der Lichtstrahlen im Inneren der Vorrichtung verwendet wird, oder ein metallischer Nano-Stab (20) ist, der auf einem transparenten Träger (21) angeordnet ist, und die optische Komponente (3) mit spektraler Differenzierungsfunktion zur Übertragung der Lichtstrahlen durch den transparenten Träger im Inneren der Vorrichtung verwendet wird,
oder ein Hohlraum (30) oder ein Abschnitt aus einem dielektrischen Material ist, der zwischen mindestens zwei elektrisch leitenden Abschnitten (31, 32) liegt und einen Helmholtz-Resonator bildet, der in Reflexion für elektromagnetische Strahlung wirksam ist, die auf den Hohlraum oder den Abschnitt aus dielektrischem Material einfällt, und die optische Komponente (3) mit spektraler Differenzierungsfunktion zur Reflexion der Lichtstrahlen innerhalb der Vorrichtung verwendet wird.

10. Vorrichtung nach einem der vorhergehenden Ansprüche, wobei die optische Komponente (3) mit spektraler Differenzierungsfunktion auf einer optischen Fläche (1a) einer Objektiv-Linse (1) angeordnet ist oder eine reflektierende optische Fläche des Objektivs bildet, in beiden Fällen vorzugsweise eine optische Eingangsfläche des Objektivs.

11. Vorrichtung nach einem der vorhergehenden Ansprüche, ferner umfassend Analysemittel (10) für das von dem Bildsensor (2) aufgenommene Bild der Szene, wobei die Analysemittel angepasst sind, um eine Verarbeitung durch Fourier-Transformation auf das Bild der Szene anzuwenden und die spektroskopischen Informationen aus einem Ergebnis der Verarbeitung durch Fourier-Transformation zu erzeugen.

12. Vorrichtung nach Anspruch 11, die in einem optischen Überwachungssystem enthalten ist, wobei das Objektiv (1) vom Weitwinkel- oder Fischauge-Typ ist, also mit einem Öffnungswinkel des optischen Eingangsfeldes, der größer als 120° ist, und wobei die Vorrichtung ferner umfasst:
- Aktivierungsmittel (11), die dazu angepasst sind, aufeinanderfolgende Bildaufnahmen durch den Bildsensor (2) zu steuern, wenn das Objektiv (1) mit der optischen Komponente (3) mit spektraler Differenzierungsfunktion ausgestattet ist, und dazu, die Analysemittel (10) zu steuern, um die spektroskopischen Informationen für mindestens einen Punkt der Szene ausgehend von jedem aufgenommenen Bild zu liefern,
- Speichermittel (12), die dazu angepasst sind, mindestens ein spektroskopisches Kriterium zu speichern;
- Vergleichsmittel (13), die dazu eingerichtet sind, die spektroskopischen Informationen, die für den Punkt der Szene ausgehend von mindestens einem der aufgenommenen Bilder geliefert werden, mit dem gespeicherten Kriterium zu vergleichen; und
- Detektionsmittel (14), die angepasst sind, um eine positive Detektionsnachricht zu erzeugen, wenn die spektroskopischen Informationen, die für den Punkt der Szene erhalten werden, dem gespeicherten Kriterium entsprechen.

## Claims

1. Device for imaging and delivering spectroscopic information, comprising:
- an objective (1), adapted to form in a focal plane an image of a scene that is contained in an entrance optical field of the imaging device;
- an image sensor (2), which is disposed in the focal plane to capture the image of the scene; and
- at least one optical component (3) having a spectral differentiation function, which is placed on a path of light rays between the scene and the focal plane, said optical component being adapted to modify an image of a point of the scene when the objective (1) is provided with said optical component, when compared to the image of the same point of the scene as formed by the objective devoid of said optical component, in different ways for at least two possible colours for the light rays that originate from the point of the scene, so that a form of the image of the point of the scene, which appears in the image as captured by the image sensor (2), delivers spectroscopic information about said point of the scene,
the device being **characterised in that** the optical component (3) having a spectral differentiation function is adapted to phase-shift light rays that originate from a same point of the scene but that pass through two different portions of a transverse section (S) of the device, in accordance with a first phase shift difference effective between said two portions for a first colour possible for said light rays, and in accordance with a second phase shift difference effective also between the same two portions but for a second colour possible for said light rays, the first and second colours being spectrally separated, and the first and second phase shift differences being different,
the phase shift that is applied by the optical component (3) to the rays of one same colour being constant within one same portion of the transverse section (S),
and **in that** the optical component (3) having a spectral differentiation function includes identical electromagnetic resonators (R1-R4) that are each efficient for phase-shifting and/or attenuating light rays in a variable manner when a colour of said light rays varies with respect to a resonance wavelength of each resonator, said identical resonators being distributed in one of the portions of the transverse section (S) of the device, with the exception of at least another one of the portions of said transverse section of the device.

2. Device according to claim 1, wherein the optical component (3) having a spectral differentiation function is adapted to modify the image of the point of the scene according to a first image pattern (M1; M1') for light rays of a first colour that originate from said point of the scene, and to modify the image of the point of the scene according to a second image pattern (M2; M2') for light rays of a second colour that originate from said point of the scene, the first and second colours being spectrally separated, and the first and second image patterns being different.

3. Device according to claim 1 or 2, wherein the optical component (3) having a spectral differentiation function is adapted to stretch, shift or split the image of the point of the scene, in the image as captured by the image sensor (2), according to stretching, shifting or splitting directions that are different between the two possible colours for the light rays that originate from the point of the scene.

4. Device according to any one of the preceding claims, wherein the optical component (3) having a spectral differentiation function includes electromagnetic resonators (R1-R4) of a plurality of different types, corresponding to resonance wavelengths that are different between resonators of different types, or corresponding to phase shift values relative to a same wavelength that are different between resonators of different types,
and wherein the resonators of each type are contained in a portion of the transverse section (S) of the device that has at least one edge with an orientation, within said transverse section of the device, different from the orientation of at least one edge of each other portion of the transverse section of the device that contains resonators of another type.

5. Device according to claim 4, wherein the optical component (3) includes N types of electromagnetic resonators (R1-R4), N being an integer between 1 and 33, and wherein a portion of the transverse section (S) of the device is divided into N areas from a central point of the portion of transverse section, and each portion of the transverse section of the device, which is dedicated to containing all the electromagnetic resonators of one of the types, is formed within the portion of transverse section by a selection of one or more of the areas, said selection being specific to said type of resonators with respect to other types of resonators.

6. Device according to claim 5, wherein N is equal to 3, and the portion of the transverse section (S) of the device is divided into first, second and third areas,
the electromagnetic resonators of first, second and third types being contained separately in the first, second and third areas, with only one of the types of electromagnetic resonators per area,
and the electromagnetic resonators being adapted to produce phase shift differences that are equal to 2·π/3 ±π/4 for a first colour when passing from one of the areas to another one according to a route oriented in the portion of transverse section (S), and equal to 4·π/3 ±π/4 for a second colour when passing from one of the areas to another one according to the same route oriented in the portion of transverse section, said first and second colours being spectrally separated.

7. Device according to claim 5, wherein N is equal to 4, the portion of the transverse section (S) of the device is divided into first (S1), second (S2), third (S3) and fourth (S4) areas,
the electromagnetic resonators of first (R1), second (R2), third (R3) and fourth (R4) types being contained in the first, second, third and fourth areas with two types of electromagnetic resonators per area, and by varying only one type of electromagnetic resonators between two areas that are neighbours within the portion of transverse section (S),
and the electromagnetic resonators being adapted to produce phase shift differences that are equal to:
π ±π/4 for a first colour between those of the areas that are separated according to a first boundary direction (D1) within the portion of transverse section (S);
0 ±π/4 for said first colour between those of the areas that are separated according to a second boundary direction (D2) different from said first boundary direction (D1) within the portion of transverse section (S);
π ±π/4 for a second colour between those of the areas that are separated according to the second boundary direction (D2) within the portion of transverse section (S), the first and second colours being spectrally separated; and
0 ±π/4 for said second colour between those of the areas that are separated according to the first boundary direction (D1) within the portion of transverse section (S);

8. Device according to any one of claims 5 to 7, wherein a pattern (P) that is formed by the areas contained in the portion of the transverse section (S) of the device, with the electromagnetic resonators that are contained in each of said areas, is repeated in the transverse section of the device so as to form a tiling of said transverse section.

9. Device according to any one of the preceding claims, wherein each electromagnetic resonator (R1-R4) is a nano-antenna of metal-insulator-metal (10, 11, 12) type, and the optical component (3) having a spectral differentiation function is used to reflect the light rays within the device,
or is a metal nano-rod (20) that is disposed on a transparent support (21), and the optical component (3) having a spectral differentiation function is used to transmit the light rays through said transparent support within the device,
or is a cavity (30) or a portion of a dielectric material that is between at least two electrically conductive portions (31, 32), and that forms a Helmholtz resonator efficient in reflection for an electromagnetic radiation impinging onto said cavity or portion of dielectric material, and the optical component (3) having a spectral differentiation function is used to reflect the light rays within the device.

10. Device according to any one of the preceding claims, wherein the optical component (3) having a spectral differentiation function is disposed on an optical face (1a) of a lens of the objective (1), or forms a reflective optical face of the objective, in both cases preferably an input optical face of said objective.

11. Device according to any one of the preceding claims, further comprising means (10) for analysing the image of the scene that is captured by the image sensor (2), said analysis means being adapted to apply a Fourier transform process to said image of the scene, and to produce the spectroscopic information from a result of the Fourier transform process.

12. Device according to claim 11, included in an optical surveillance system, wherein the objective (1) is of a wide-angle or fish-eye type, that is to say with and aperture angle of the entrance optical field that is greater than 120°, and the device further comprises:
- activation means (11), which are adapted to control successive image captures by the image sensor (2) when the objective (1) is provided with the optical component (3) having a spectral differentiation function, and to control the analysis means (10) so as to deliver the spectroscopic information for at least one point of the scene from each captured image;
- memory means (12), which are adapted to store at least one spectroscopic criterion;
- comparison means (13), which are arranged to compare with the criterion stored in memory, the spectroscopic information delivered for the point of the scene from at least one of the captured images; and
- detection means (14), which are adapted to produce a positive detection message when the spectroscopic information that is obtained for the point of the scene corresponds to the criterion stored in memory.
